# EUROPÄISCHE PATENTSCHRIFT

(11) **EP 1 476 333 B1**
(45) Veröffentlichungstag und Bekanntmachung des Hinweises auf die Patenterteilung: **12.07.2006**
(21) Anmeldenummer: 03706462.3
(22) Anmeldetag: 08.02.2003
(51) Int. Cl.: B60R 21/34

(54) **SCHLOSSANORDNUNG EINER FAHRZEUGHAUBE**
LOCK ASSEMBLY FOR A VEHICLE HOOD
SERRURE POUR CAPOT DE VEHICULE

(30) Priorität: 19.02.2002 DE 10206765
(43) Veröffentlichungstag der Anmeldung: 17.11.2004
(73) Patentinhaber: DaimlerChrysler AG, 70567 Stuttgart (DE)
(72) Erfinder: KOPPENHÖHL, Jürgen, 89275 Elchingen (DE); VISEL, Kai, 70569 Stuttgart (DE); WEIK, Eberhard, 71263 Weil der Stadt (DE)
(86) Internationale Anmeldenummer: PCT/EP2003/001265
(87) Internationale Veröffentlichungsnummer: WO 2003/070529

(56) Entgegenhaltungen:
- WO-A-00/69706
- DE-A- 10 034 523
- DE-A- 10 102 760
- DE-A- 19 721 565
- PATENT ABSTRACTS OF JAPAN vol. 2002, no. 05, 3. Mai 2002 (2002-05-03) -& JP 2002 019641 A (TOYOTA MOTOR CORP), 23. Januar 2002 (2002-01-23)
- PATENT ABSTRACTS OF JAPAN vol. 2002, no. 06, 4. Juni 2002 (2002-06-04) -& JP 2002 037129 A (ISUZU MOTORS LTD), 6. Februar 2002 (2002-02-06)

## Beschreibung

Die Erfindung betrifft eine Schlossanordnung einer Fahrzeughaube, entsprechend dem Oberbegriff des Anspruches 1.

Es wird allgemein angestrebt, Fahrzeugkarosserien konstruktiv so auszubilden, daß die Gefahr der Verletzung eines Fußgängers bei einer Kollision mit dem Fahrzeug nach Möglichkeit verringert wird. Hierzu sind in Zukunft einschlägige Gesetzesbestimmungen zu erwarten.

Im Hinblick auf den Schutz der Fußgänger bei Kollisionen mit Fahrzeugen muß die Fahrzeugkarosserie hinreichend nachgiebig ausgestaltet sein, derart, daß sich die vom Fußgänger beaufschlagte Aufprallfläche unter Aufzehrung von Aufprallenergie verformen kann. Diese Forderung kann regelmäßig nur dann erfüllt werden, wenn steife Strukturteile der Karosserie im Bereich typischer Kollisionsflächen mit hinreichendem Abstand von der verformbaren Karosserieaußenseite angeordnet sind.

Darüber hinaus ist es aus der DE 199 22 455 Cl bekannt, die Schwenklager einer Fahrzeughaube nachgiebig anzuordnen.

Die DE 197 21 565 A1 zeigt die Möglichkeit, den Raum vor dem Fahrzeug bei der Fahrt sensorisch zu überwachen, so daß eine bevorstehende Kollision mit einem Fußgänger erkannt werden kann. In einem solchen Falle wird eine Fronthaube durch einen Aktor in eine federbare angehobene Riegellage gestellt, so daß bei der folgenden Kollision ein vergrößerter Bewegungsbereich der Fronthaube gegeben ist.

Ein funktional ähnliches aktives Sytem, mit dem die Fronthaube bei Kollisionsgefahr in eine erhöhte federbare Lage angehoben wird, ist Gegenstand der DE 100 34 523 A1.

Gemäß der JP 2002-19641 A greift ein an einer Fahrzeughaube feststehend angeordnetes Gegenriegelteil in Riegelteile einer chassisseitigen Schlossanordnung ein, deren Gehäuse an einem chassisseitigen Strukturteil derart angeordnet ist, dass es bei übermäßiger Belastung der Haube eine Schwenkbewegung ausführt, bei der die Haube über die normale Schließposition hinaus abgesenkt wird.

Eine funktional ähnliche Anordnung wird in der JP 2002-37129 A gezeigt. Hier ist zwar das chassisseitige Schlossgehäuse unverrückbar an einem chassisseitigen Strukturteil angeordnet, jedoch lassen sich die mit dem haubenseitigen Gegenriegelteil zusammenwirkenden Schlosselemente bei Überbelastung der Haube in Schließrichtung in eine Sonderlage drängen, in der die Haube ebenfalls eine gegenüber ihrer normalen Schließlage deutlich tiefere Lage einnimmt.

Aufgabe der Erfindung ist es nun, einen guten Fußgängerschutz im Bereich der Schlossanordnungen von Karosseriehauben bei besonders einfacher Konstruktion zu gewährleisten.

Diese Aufgabe wird durch die kennzeichnenden Merkmale des Anspruches 1 gelöst.

Die Erfindung beruht auf dem allgemeinen Gedanken, die an der Schlossanordnung bewirkten Stützkräfte bei Beaufschlagung der geschlossenen Haube in Schließrichtung durch haubenseitige Maßnahmen auf ein vorgegebenes Maß zu begrenzen, so dass bei entsprechender Überbelastung der Haube auch im Bereich der Schlossanordnung ein großer Weg zur Aufzehrung von Aufprallenergie zur Verfügung steht. Die zusätzliche Nachgiebigkeit im Bereich der Schlossanordnung kann ohne weiteres mit ausgeprägter Richtungscharakteristik ausgebildet sein, derart, dass in Öffnungsrichtung der geschlossenen Haube außerordentlich hohe Kräfte ohne Verformung der Schlossanordnung und/oder benachbarter Strukturteile aufgenommen werden können, während die zusätzliche Nachgiebigkeit bei zusätzlicher Belastung in Schließrichtung bei vergleichsweise geringen Kräften, wie sie bei Kollisionen des Fahrzeuges mit Fußgängern typischerweise auftreten, möglich ist. Typischerweise sollte die zusätzliche Nachgiebigkeit wirksam werden, wenn im Schlossbereich Kräfte von etwa 1.000 N in Schließrichtung wirken.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung näher erläutert werden.

Dabei zeigt
- Fig. 1: eine schematisierte Darstellung einer ersten Ausführungsform und
- Fig. 2: eine abgewandelte Ausführungsform.

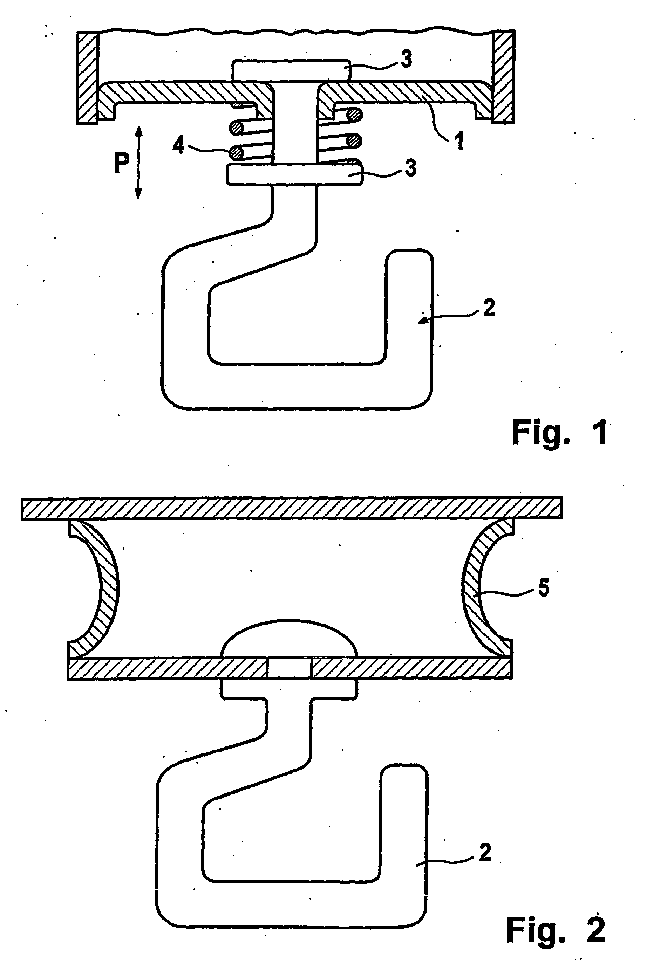

Im Beispiel der Fig. 1 ist an einem nicht näher dargestellten Strukturteil einer ebenfalls nicht dargestellten Fahrzeughaube eine Flanschplatte 1 befestigt, die einen Schlosshaken 2 trägt, welcher mit nicht dargestellten Riegelteilen an chassisseitigen Karosserieteilen in grundsätzlich bekannter Weise zusammenwirkt.

Der Schlosshaken 2 ist in einer Öffnung der Flanschplatte 1 in Richtung des Doppelpfeiles P verschiebbar angeordnet, wobei der möglicher Verschiebehub durch Ringkragen 3 am Schlosshaken 2 begrenzt wird.

Zwischen der Flanschplatte 1 und dem unteren Ringkragen 3 ist eine vorgespannte Schraubendruckfeder 4 angeordnet, die den Schlosshaken 2 relativ zur Flanschplatte 1 in der dargestellten Normallage zu halten sucht. Die Vorspannung der Schraubendruckfeder 4 ist so bemessen, dass diese Normallage bei normaler Schließbetätigung der Fahrzeughaube und normalen Belastungen unverändert aufrechterhalten wird.

Erst wenn eine vorgegebene Überlast erreicht oder überschritten wird, kann die Schraubendruckfeder 4 nachgeben, wobei sich der Schlosshaken 2 relativ zur Flanschplatte 1 in der Zeichnung nach oben verschiebt.

Diese Verschiebung tritt typischerweise erst dann ein, wenn das Fahrzeug mit einem Fußgänger kollidiert, derart, dass der Fußgänger die Fahrzeughaube stark in Abwärtsrichtung, d.h. in Schließrichtung der Haube belastet. Bei einer derartigen Belastung wirkt an sich der Schlosshaken 1 mit den chassisseitigen Riegelorganen im Sinne einer Abstützung der Fahrzeughaube entgegen der Kollisionsrichtung des Fußgängers zusammen. Aufgrund der gegen die Kraft der Schraubendruckfeder 4 verschiebbaren Anordnung des Schlosshakens 2 kann dann die Haube eine Zusatzbewegung ausführen, die deutlich über die normale Schließlage der Haube im Bereich der Schlossanordnung hinausgeht. Erfindungsgemäß wird also eine Zusatzbeweglichkeit der Haube gewährleistet, derart, dass Kollisionsenergie unter Verformung aufgezehrt werden kann.

Gegebenenfalls kann der Hals des Schlosshakens 2 zwischen den Ringkragen 3 konisch ausgebildet sein, derart, dass sich der Durchmesser des Halses zum unteren Ringkragen 3 hin erweitert. Wenn der Schlosshaken 2 in einer entsprechend engen Öffnung der Flanschplatte 1 angeordnet ist, wird diese Öffnung bei Verschiebung des Schlosshakens 2 relativ zur Flanschplatte 1 in Aufwärtsrichtung unter entsprechender Reibung erweitert, so dass wiederum zusätzlich zur Kraft der Schraubendruckfeder 4 oder alternativ zur Kraft der Feder, die bei dieser Konstruktion auch entfallen kann, ein energieaufzehrender Bewegungswiderstand für den Schlosshaken 2 relativ zur Flanschplatte 1 erzeugt wird.

Im Beispiel der Fig. 2 ist der Schlosshaken 2 an einem Pralltopf 5 angeordnet, welcher bei vorgegebener Überlast in Druckrichtung unter Stauchung verformbar ist.

Die Erfindung ist nicht auf die zeichnerisch dargestellten Ausführungsformen beschränkt.

Insbesondere ist es möglich, zusätzlich oder alternativ zur nachgiebigen Anordnung haubenseitiger Elemente der Schlossanordnung auf der Chassisseite entsprechend nachgiebige Elemente der Schlossanordnung vorzusehen.

Des weiteren kann die gewünschte Nachgiebigkeit im Bereich der Schlossanordnung durch prinzipiell beliebig verformbare oder verbiegbare Bauteile gewährleistet werden.

## Patentansprüche

1. Schlossanordnung einer Fahrzeughaube, insbesondere Fronthaube eines Personenkraftwagens, mit in einem normalen Schließzustand entgegen der Schließrichtung der Haube stützwirksamen bzw. bei Überschreitung einer Belastungsschwelle stützwirksam werdenden Schlossteilen, wobei die von der Schloßanordnung bei Beaufschlagung der geschlossenen Haube in Schließrichtung bewirkten Stützkräfte konstruktiv auf ein vorgegebenes Maß begrenzt sind und die Haube bei diese Stützkräfte übersteigender Last über ihre normale Stützposition hinaus beweglich ist,
**dadurch gekennzeichnet,**
**dass** ein haubenseitiges Riegel- oder Gegenriegelteil (2)
- an einem Halteteil oder einer Flanschplatte (1) verschiebbar angeordnet und mittels vorgespannter Feder (4) in einer Normallage gehaltert
oder
- an einem deformierbaren Pralltopf (5) angeordnet ist.

2. Schlossanordnung nach Anspruch 1,
**dadurch gekennzeichnet,**
**daß** sowohl haubenseitig als auch chassisseitig nachgiebig ausgebildete bzw. angeordnete Anschlag- und/oder Schlossteile vorgesehen sind.

## Claims

1. Lock assembly for a vehicle hood, in particular bonnet of a passenger vehicle, having lock parts which become effective in terms of support counter to the closing direction of the hood in a normal closed state or become effective in terms of support when a load threshold is exceeded, the supporting forces caused in the closing direction by the lock assembly upon action of the closed hood being limited structurally to a predetermined extent and, when the load exceeds these supporting forces, the hood being moveable beyond its normal supporting position, **characterized in that** a hood-side bolt part or mating bolt part (2)
- is arranged displaceably on a retaining part or a flange plate (1) and is secured in a normal position by means of a prestressed spring (4)
or
- is arranged on a deformable impact absorber (5).

2. Lock assembly according to Claim 1, **characterized in that** stop parts and/or lock parts formed or arranged in a flexible manner are provided both on the hood side and on the chassis side.

## Revendications

1. Agencement de serrure pour un capot de véhicule, notamment un capot avant d'un véhicule léger, comprenant, dans un état de fermeture normal, des parties de serrure à support actif à l'encontre de la direction de verrouillage du capot, ou, dans le cas d'un dépassement d'un seuil de sollicitation, acquérant un support actif, les forces de support exercées dans la direction de verrouillage par l'agencement de serrure lors de la sollicitation du capot fermé étant limitées à une certaine mesure par la construction et le capot pouvant être déplacé au-delà de sa position normale de support dans le cas d'une charge dépassant ces forces de support,
**caractérisé en ce qu'**une partie de verrou ou de contre-verrou (2) du côté du capot
- est disposée de manière déplaçable sur une partie de fixation ou une plaque de bride (1) et est maintenue dans une position normale au moyen d'un ressort précontraint (4),
ou
- est disposée sur un pot antichoc déformable (5).

2. Agencement de serrure selon la revendication 1,
**caractérisé en ce que**
du côté du capot ainsi que du côté du châssis sont prévues des pièces de butée et/ou de serrure réalisées sous forme flexible ou disposées de manière flexible.
